# EUROPEAN PATENT SPECIFICATION

(11) **EP 1 230 844 B1**
(45) Date of publication and mention of the grant of the patent: **31.05.2006**
(21) Application number: 02075241.6
(22) Date of filing: 21.01.2002
(51) Int. Cl.: A01J 7/02

(54) **A cleaning device**
Reinigungsvorrichtung
Dispositif de nettoyage

(30) Priority: 12.02.2001 NL 1017338
(43) Date of publication of application: 14.08.2002
(73) Proprietor: Lely Enterprises AG, 6300 ZUG (CH)
(72) Inventor: Van den Berg, Karel, 2971 BR Bleskensgraaf (NL)
(74) Representative: Corten, Maurice Jean F.M.

(56) References cited:
- US-A- 5 784 994
- US-A- 6 148 766

## Description

The invention relates to a cleaning device for cleaning the exterior of a milking parlour by means of a cleaning fluid, according to the preamble of claim 1.

Such a known cleaning device is constituted by a hose that is manually operated by a farmer and through which cleaning fluid is spouted. This operation of the cleaning device is time-consuming and cumbersome. As a result thereof it sometimes happens that a farmer has not sufficient time for cleaning the milking parlour, which may have a negative effect on the hygienic conditions.

It is an object of the present invention to provide a cleaning device at least partially obviating said drawback.

For that purpose, according to the invention a cleaning device of the above-described type comprises the measures according to the characterizing part of claim 1. Due to the fact that for cleaning the interior of the milking robot, in particular the milk lines thereof, there is already used rinsing fluid, it is advantageous to use this rinsing fluid as cleaning fluid for the milking parlour. In this way water is saved. No animal being present in the milking parlour during the cleaning of the interior of the robot, the exterior of the milking robot and/or the bottom can, of course, be cleaned as well without first having to wait until the milking parlour is empty.

From US 5,784,994 an apparatus for automatically cleaning the interior of parts of a milking machine is known per se.

An improved cleaning is obtained when the cleaning device comprises a means for applying pressure to the cleaning fluid, such as e.g. a pump.

The cleaning device preferably comprises a nozzle which is disposed in a fixed position relative to the milking parlour. For obtaining a desired cleaning it is desirable in some situations to use various nozzles that are fastened at different places. The function or control of the various nozzles can then be attuned to each other, e.g. be software-controlled.

The entire milking parlour can be cleaned in a simple manner when the nozzle is movably disposed relative to the milking parlour. The nozzle may for example be fastened to a rail and then be movable along said rail.

An extremely efficient cleaning can be obtained when the nozzle is fastened to a robot arm. A compact construction is obtained when the robot arm carries at least one teat cup. Such a robot arm is already present in a milking robot, so that no separate robot arm for the nozzle is required. Such a robot arm may be equipped with a gripper for gripping the nozzle.

Although the nozzle may be fixedly suspended, e.g. in a fixed position relative to the robot arm, it is advantageous when the nozzle is movably suspended. This makes it possible to obtain a larger cleaning range.

It is particularly advantageous when the guide means comprise a movable separation arm driven by a cylinder, said separation arm carrying an outlet of the rinsing device. Said outlet can be adapted to be disposed on a supply line towards the nozzle.

Alternatively or additionally the cleaning device comprises a spreading plate, and the outlet of the separation arm is movable to above said spreading plate. Such a spreading plate causes to create a fan of cleaning fluid with which the cleaning can be effected.

For the purpose of providing a possibility of processing of waste, the milking parlour is provided with a plurality of containers, each adapted to contain a particular kind of used cleaning fluid. Depending on the kind of cleaning, base, acid or chlorine is used. Until now such cleaning fluids were usually discharged via the sewer, which is undesired for reasons of environmental protection. By collecting the cleaning fluids in containers it is possible to process the contents thereof in a simple manner.

The milking parlour is preferably provided with a plurality of containers, each adapted to contain a particular kind of milk obtained, such as colostrum, milk containing blood, antibiotics, or the like. In this manner it is possible, if desired, to separate per animal the kind of milk obtained and the latter is not collected in a single container.

Separation is obtained in a simple manner when the separation arm is movable to above a relevant container. The movement of the separation arm can be controlled with the aid of determining means for determining the kind of cleaning fluid used respectively the kind of milk obtained. In the case of the kind of milk obtained, the control of the separation arm is preferably partially realized with the aid of data from an animal identification device.

There are preferably provided contents measuring means for measuring the contents of the containers. The contents measuring means are adapted to issue a control signal respectively an indicative signal for automatic control of interchanging containers or for giving an indication to a farmer, e.g. on a display, by means of a sound, or via the mobile telephone of the relevant farmer, or to a service department.

In order to achieve that the cleaning is performed at a suitable point of time, a preferred embodiment of a cleaning device according to the invention is characterized in that the cleaning device is provided with a presence detection device for detecting the presence of an animal in the milking parlour, the presence detection device issuing a signal to the cleaning device upon detection of an animal in the milking parlour, said signal stopping respectively preventing the operation of the cleaning device.

For cleaning only in the case of necessity in a simple manner, there is preferably provided a cleanliness detection device for detecting the cleanliness of the milking parlour, the cleaning device being controlled with the aid of data from the cleanliness detection device.

For preventing during cleaning an animal from entering the milking parlour, the cleaning device comprises a closing means for closing the entrance to the milking parlour when the cleaning device is in operation.

The cleaning device preferably comprises a drying device for drying the exterior of the milking parlour after cleaning. As a result thereof the hygienic condition of the milking parlour is further improved.

The cleaning device is preferably provided with an additive means for adding additives to the cleaning fluid, so that for a specific cleaning a specific additive can be used. In this connection disinfecting means and the like may be taken into account. Addition of additives preferably takes place automatically. For example, after a predetermined number of normal cleanings there can each time be performed a cleaning with a specific additive.

When the cleaning device is provided with an animal identification device, the additive means being controlled with the aid of data from the animal identification device, it is possible to clean the milking parlour in a specific manner after the milking parlour has been visited by a particular animal. For example, when an animal has a disease, a separate cleaning can take place, so that spreading of the disease by other animals visiting the milking parlour is prevented.

When the device is provided with a separation arm, it is advantageous to use the device besides or instead of cleaning for separating the different kinds of milk obtained.

The invention will be further elucidated hereinafter with reference to the drawing, in which:
Figure 1 is a schematic side view of an embodiment of a cleaning device according to the invention;
Figure 2 is a schematic side view of an alternative embodiment of a cleaning device according to the invention;
Figure 3 is a schematic plan view of the embodiment according to Figure 2;
Figure 4 is a schematic plan view of a further alternative embodiment of a cleaning device according to the invention, and
Figure 5 is a schematic plan view of another further alternative embodiment of a cleaning device according to the invention.

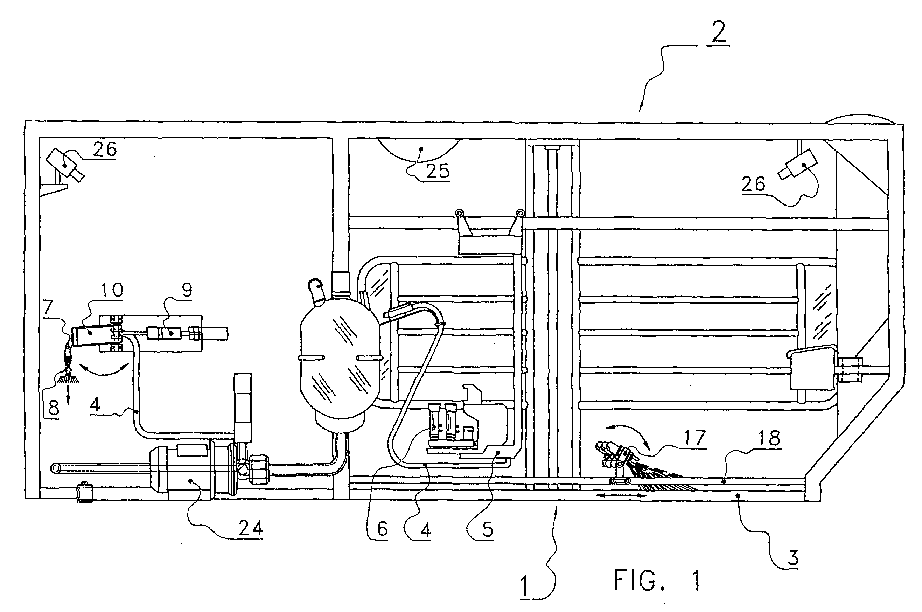

Figure 1 is a schematic side view of a milking parlour 1. The milking parlour 1 comprises inter alia a milking robot 2 and a bottom 3 on which an animal to be milked can stand. The milking robot 2 is provided with a rinsing device 4 for cleaning the interior of the milking robot 2 by means of rinsing fluid. The rinsing device 4 rinses and cleans in particular the parts of the milking robot 2 that come into contact with milk, such as milk lines and the like. The milking robot 2 further comprises a robot arm 5 for carrying inter alia teat cups 6.

The invention relates to an automatic cleaning device for cleaning the exterior of the milking parlour 1 by means of a cleaning fluid. A few embodiments of such an automatic cleaning device will be discussed hereinafter.

Figure 1 shows an embodiment in which rinsing fluid coming from the milking robot 2 is used as cleaning fluid for the exterior of the milking parlour 1. Guide means 7 guide the rinsing fluid to a nozzle 8 constituting an outlet of the cleaning device. Said guide means 7 and said nozzle 8 are disposed on a movable separation arm 10 driven by a cylinder 9.

The separation arm 10 is preferably movable in a reciprocating manner by operating the cylinder 9, so that a larger surface of the exterior of the milking parlour 1 can be cleaned.

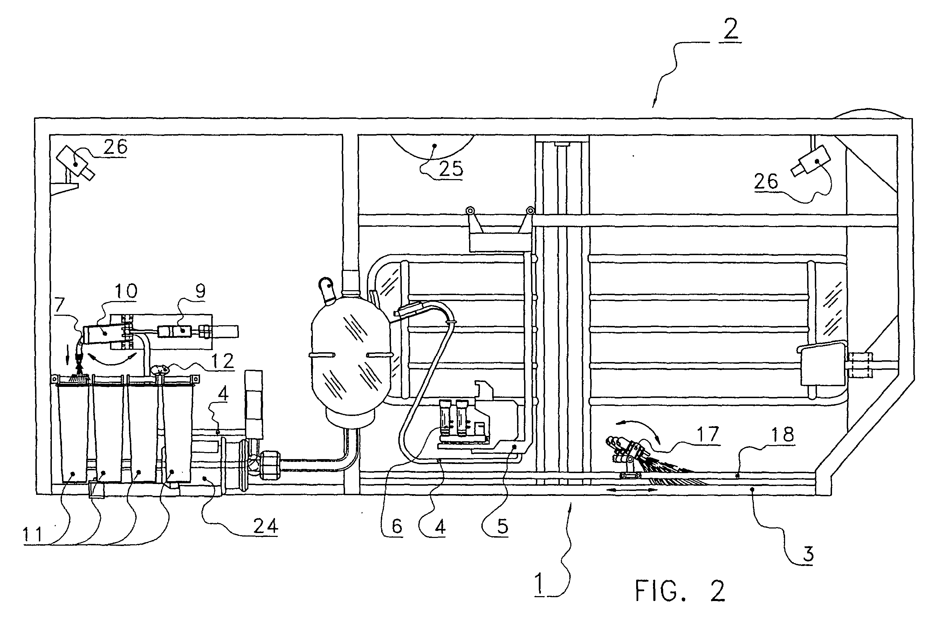

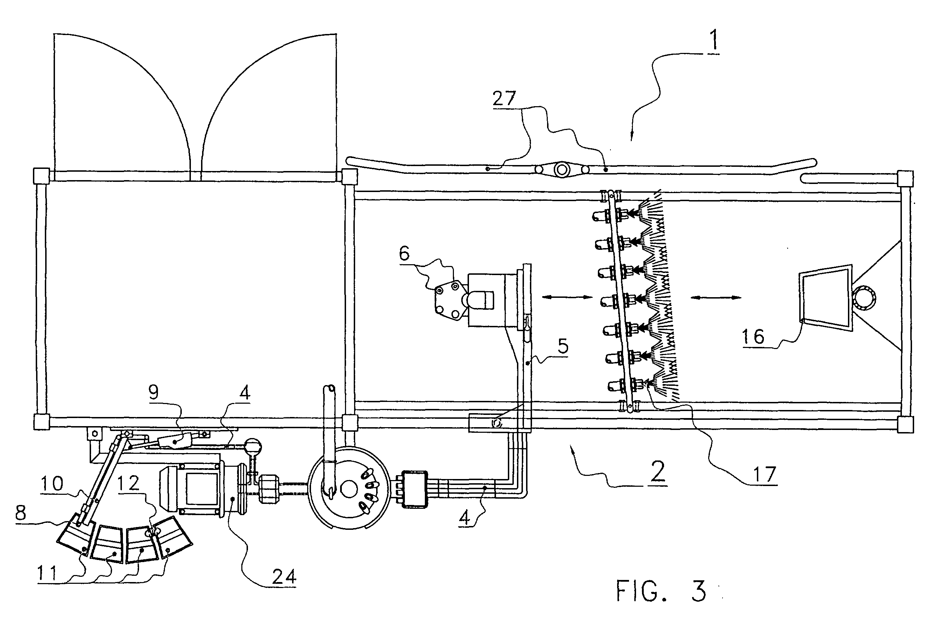

The milking parlour 1 may be provided with a plurality of containers 11 (see Figures 2 and 3), each adapted to contain a particular kind of used cleaning fluid. For the purpose of discharging particular cleaning fluids the separation arm 10 can then be moved to above a relevant container 11 by automatic operation of the cylinder 9. There is thus provided a possibility of processing of waste, and particular kinds of used cleaning fluid, such as base, acid or chlorine, can be collected for being processed.

As shown in Figure 2, the nozzle 8 is located at a small distance above the containers 11. For the purpose of ensuring in this embodiment that besides the discharge of the cleaning fluid into the containers 11 the exterior of the milking parlour 1 is cleaned, the containers 11 may for example be designed movably. Alternatively there may be provided a spreading plate 12, the nozzle 8 being movable to above said spreading plate 12. The spreading plate 12 then ensures a spreading of the cleaning fluid over the exterior of the milking parlour 1. It will be obvious that alternatively the containers can also be adapted to be closed automatically, and that the spreading plate can also be used differently than in combination with the containers.

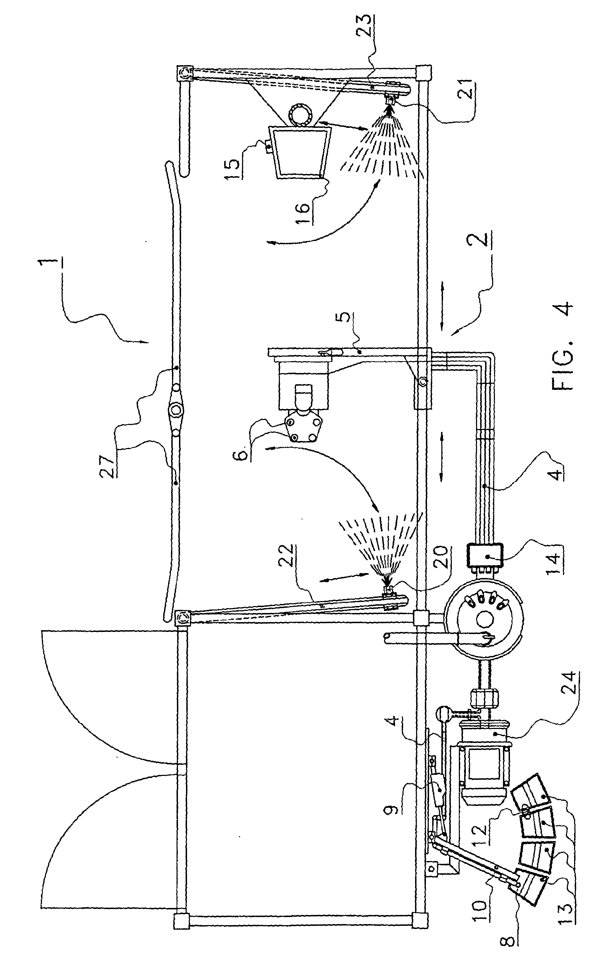

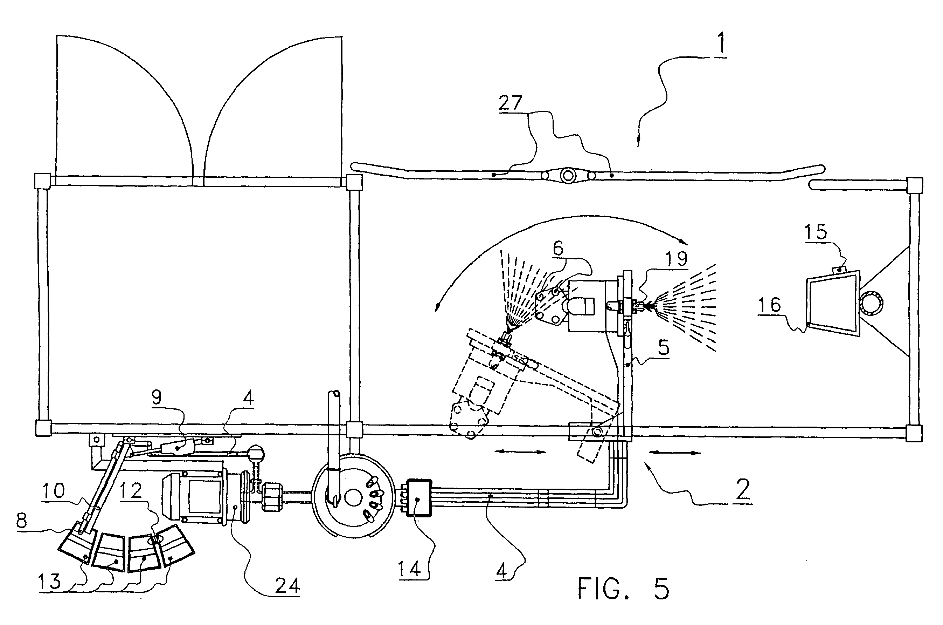

The invention also relates to a milking parlour 1 that is provided with a plurality of containers 13 (see Figures 4 and 5), each adapted to contain a particular kind of milk obtained, such as colostrum, milk containing blood, antibiotics, or the like. These kinds of milk then flow to the outlet 8 via the milk lines 4 of the teat cups 6. By automatic operation of the separation arm 10 the kinds of milk can then be discharged into the relevant containers 13. In this manner the kind of milk obtained can be separated, if desired, per animal and is not collected in a single container. The movement of the separation arm 10 can be controlled by means of determining means 14 for determining the kind of cleaning fluid used respectively the kind of milk obtained. In the case of the kind of milk obtained the control of the separation arm is preferably also realized with the aid of data from an animal identification device 15, e.g. disposed on a feeding trough 16.

There are preferably provided (non-shown) contents measuring means for measuring the contents of the containers 11, 13. The contents measuring means can issue a control signal respectively an indicative signal for automatic control of interchanging containers or for giving an indication to a farmer, e.g. on a display, by means of a sound, or via the mobile telephone of the relevant farmer, or to a service department. The contents measuring means may for example be constituted by weighing means or means for determining the level of the fluid in the containers.

According to the embodiment of Figure 1 it is also possible, although not shown in the drawing, that the nozzle 8 is movable to above the inlet of a line, said line conveying the rinsing fluid to at least one nozzle 17. Said nozzle 17 is movably disposed relative to the milking parlour 1. This movability can for example be obtained by fastening to a rail 18. The movement over the rail 18 is such that at least almost the entire bottom 3 of the milking parlour 1 can be cleaned by the nozzle 17. For the purpose of increasing the cleaning range, each of the nozzles is preferably movably suspended. The movement may be a driven movement, but is preferably automatically controlled by the force of the jet of fluid.

Besides being movably fastened to a rail, a nozzle 19 can also be fastened to the robot arm 5, as shown in Figure 5. By the movement of the robot arm 5, schematically shown by the pivotal movement of the position indicated by solid lines to the position indicated by broken lines, the entire bottom 3 of the milking parlour 1 can be covered. It is noticed that when the nozzle 19 is movably fastened instead of rigidly fastened to the robot arm 5, also other parts of the exterior of the milking parlour 1 can be cleaned.

The nozzle 19 may be rigidly fastened to the robot arm 5, but the latter may also be equipped with a gripper for gripping the nozzle, so that the nozzle can be disposed in a storage means beside the milking robot and, when required, be taken out therefrom by the gripper.

Figure 4 shows further nozzles 20 and 21 for cleaning the exterior of the milking parlour 1. Said nozzles 20, 21 may be fastened rigidly or movably to pivotable arms 22 respectively 23. The nozzles 20, 21 may alternatively be fastened rigidly respectively movably to non-movable parts of the frame of the milking robot 2 or other fixed parts of the milking parlour 1.

Although the nozzles may be connected via lines to the outlet of the rinsing device for the interior of the milking robot, it is also possible that the nozzles are coupled to a source of clean water, such as a cock of the water supply system.

For applying pressure to the cleaning fluid there is provided a pump 24 that can be switched on automatically in case of cleaning.

In order to achieve that the cleaning is performed at a suitable point of time, there is provided a presence detection device 25 (Figures 1 and 2) for detecting the presence of an animal in the milking parlour 1. Upon detection of the presence of an animal in the milking parlour 1 the presence detection device 25 issues a signal to the cleaning device, said signal stopping respectively preventing the operation of the cleaning device.

For cleaning only in the case of necessity in a simple manner, there is preferably provided a cleanliness detection device 26 (Figure 1) for detecting the cleanliness of the milking parlour 1. The cleanliness detection device 26 may comprise for example cameras. These cameras may be disposed at a fixed place in the milking parlour 1, but for example also on the robot arm 5. The cleaning device is then controlled with the aid of data from the cleanliness detection device 26.

In order to prevent during cleaning an animal from entering the milking parlour, the cleaning device comprises a closing means 27 for closing the entrance to the milking parlour 1 when the cleaning device is in operation.

It will be obvious that the invention is not limited to the above-described embodiments, but that within the scope of the claims numerous modifications are possible. There may for example be provided a drying device for drying the exterior of the milking parlour after cleaning. This is particularly advantageous when also the operation space of the milking robot has to be cleaned. There may further be provided an additive means for adding additives to the cleaning fluid, so that for a specific cleaning a specific additive can be used. In this connection disinfecting means and the like may be taken into account. Addition of additives preferably takes place automatically. For example, after a predetermined number of normal cleanings there can each time be performed a cleaning with a specific additive. The additive means may further be controlled with the aid of data from the animal identification device, so that it is possible to clean the milking parlour in a specific manner after a visit of a particular animal. Further it will be obvious that there is preferably provided a computer controlling the functions of the cleaning device on the basis of data obtained. There may additionally be provided an activation switch for manually activating the cleaning device, no more actions being required for the cleaning itself.

## Claims

1. A cleaning device for cleaning the exterior of a milking parlour (1) by means of a cleaning fluid, the milking parlour (1) comprising a milking robot (2) and a bottom (3) on which an animal to be milked can stand, the milking robot (2) being provided with a rinsing device (4) for cleaning the interior of the milking robot (2) by means of rinsing fluid, **characterized in that** the cleaning device for cleaning the exterior of the milking parlour (1) is constituted by an automatic cleaning device, and **in that** there are provided guide means (7) for guiding rinsing fluid coming from the milking robot (2) and having been used for cleaning the interior of the milking robot (2), for cleaning the exterior of the milking parlour (1),

2. A cleaning device as claimed in claim 1, **characterized in that** the cleaning device comprises a means for applying pressure to the cleaning fluid.

3. A cleaning device as claimed in claim 2, **characterized in that said** means comprises a pump (24).

4. A cleaning device as claimed in any one of the preceding claims, **characterized in that** the cleaning device comprises a nozzle which is disposed in a fixed position relative to the milking parlour (1).

5. A cleaning device as claimed in any one of the preceding claims 1 through 3, **characterized in that** the nozzle(8, 17, 19, 20, 21) is movably disposed relative to the milking parlour (1).

6. A cleaning device as claimed in claim 5, **characterized in that** the nozzle (8, 17, 19, 20, 21) is fastened to a rail (18).

7. A cleaning device as claimed in claim 5 or 6, **characterized in that** the nozzle (8, 17, 19, 20, 21) is fastened to a robot arm (5).

8. A cleaning device as claimed in claim 7, **characterized in that** the robot arm (5) carries at least one teat cup (6).

9. A cleaning device as claimed in claim 7, **characterized in that** the robot arm (5) is equipped with a gripper for gripping the nozzle (8, 17, 19, 20, 21).

10. A cleaning device as claimed in any one of the preceding claims 4 through 9, **characterized in that** the nozzle (8, 17, 19, 20, 21) is movably suspended.

11. A cleaning device as claimed in any one of the preceding claims, **characterized in that** the guide means (7) comprise a movable separation arm driven by a cylinder (9), said separation arm carrying an outlet of the rinsing device (4).

12. A cleaning device as claimed in claim 11, **characterized in that** the cleaning device comprises a spreading plate (12), and **in that** the outlet of the separation arm is movable to above the spreading plate (12).

13. A cleaning device as claimed in any one of the preceding claims, **characterized in that** the milking parlour (1) is provided with a plurality of containers (11, 13), each adapted to contain a particular kind of used cleaning fluid.

14. A cleaning device as claimed in any one of the preceding claims, **characterized in that** the milking parlour(1) is provided with a plurality of containers (11, 13), each adapted to contain a particular kind of milk obtained, such as colostrum, milk containing blood, antibiotics, or the like.

15. A cleaning device as claimed in claims 11 and 13 or 11 and 14, **characterized in that** the separation arm is movable to above a relevant container.

16. A cleaning device as claimed in claims 13 and 15, **characterized in that** the cleaning device comprises determining means (14) for determining the kind of cleaning fluid used, and **in that** the movement of the separation arm is controlled with the aid of data from the determining means (14).

17. A device as claimed in claims 14 and 15, **characterized in that** the cleaning device comprises determining means (14) for determining the kind of milk obtained, and **in that** the movement of the separation arm is controlled with the aid of data from the determining means (14).

18. A cleaning device as claimed in claim 13 or 14, **characterized in that** the cleaning device is provided with contents measuring means for measuring the contents of the containers (11, 13).

19. A cleaning device as claimed in claim 18, **characterized in that** the contents measuring means issue a control signal, respectively an indicative signal.

20. A cleaning device as claimed in any one of the preceding claims, **characterized in that** the cleaning device is provided with a presence detection device (25) for detecting the presence of an animal in the milking parlour(1), the presence detection device (25) issuing a signal to the cleaning device upon detection of an animal in the milking parlour (1), said signal stopping respectively preventing the operation of the cleaning device.

21. A cleaning device as claimed in any one of the preceding claims, **characterized in that** the cleaning device is provided with a cleanliness detection device (26) for detecting the cleanliness of the milking parlour(1), the cleaning device being controlled with the aid of data from the cleanliness detection device (26).

22. A cleaning device as claimed in any one of the preceding claims, **characterized in that** the cleaning device comprises a closing means (27) for closing the entrance to the milking parlour (1) when the cleaning device is in operation.

23. A cleaning device as claimed in any one of the preceding claims, **characterized in that** the cleaning device comprises a drying device for drying the exterior of the milking parlour (1) after cleaning.

24. A cleaning device as claimed in any one of the preceding claims, **characterized in that** the cleaning device is provided with an additive means for adding additives to the cleaning fluid.

25. A cleaning device as claimed in claim 23, **characterized in that** the cleaning device is provided with an animal identification device (15), the additive means being controlled with the aid of data from the animal identification device (15).

26. A device as claimed in claim 11, or in any one of the preceding claims 12 through 25 with reference to claim 11, **characterized in that** the device is used for separating the different kinds of milk obtained.

## Patentansprüche

1. Reinigungsvorrichtung zum Reinigen des Äußeren eines Melkstandes (1) mittels einer Reinigungsflüssigkeit, wobei der Melkstand (1) einen Melkroboter (2) und einen Boden (3) umfaßt, auf dem ein zu melkendes Tier stehen kann, wobei der Melkroboter (2) mit einer Spülvorrichtung (4) zum Reinigen des Inneren des Melkroboters (2) mittels einer Spülflüssigkeit versehen ist,
**dadurch gekennzeichnet, daß** die Reinigungsvorrichtung zum Reinigen des Äußeren des Melkstandes (1) durch eine automatische Reinigungsvorrichtung gebildet ist, und daß Führungsmittel (7) vorhanden sind, um Spülflüssigkeit, die von dem Melkroboter (2) kommt und zum Reinigen des Inneren des Melkroboters (2) verwendet wurde, der Reinigung des Äußeren des Melkstandes (1) zuzuführen.

2. Reinigungsvorrichtung nach Anspruch 1,
**dadurch gekennzeichnet, daß** die Reinigungsvorrichtung eine Vorrichtung zum Beaufschlagen der Reinigungsflüssigkeit mit Druck umfaßt.

3. Reinigungsvorrichtung nach Anspruch 2,
**dadurch gekennzeichnet, daß** die Vorrichtung eine Pumpe (24) umfaßt.

4. Reinigungsvorrichtung nach einem der vorhergehenden Ansprüche,
**dadurch gekennzeichnet, daß** die Reinigungsvorrichtung eine Düse umfaßt, die relativ zu dem Melkstand (1) in einer festen Position angeordnet ist.

5. Reinigungsvorrichtung nach einem der vorhergehenden Ansprüche 1 bis 3,
**dadurch gekennzeichnet, daß** die Düse (8, 17, 19, 20, 21) relativ zu dem Melkstand (1) bewegbar angeordnet ist.

6. Reinigungsvorrichtung nach Anspruch 5,
**dadurch gekennzeichnet, daß** die Düse (8, 17, 19, 20, 21) an einer Schiene (18) befestigt ist.

7. Reinigungsvorrichtung nach Anspruch 5 oder 6,
**dadurch gekennzeichnet, daß** die Düse (8, 17, 19, 20, 21) an einem Roboterarm (5) befestigt ist.

8. Reinigungsvorrichtung nach Anspruch 7,
**dadurch gekennzeichnet, daß** der Roboterarm (5) mindestens einen Zitzenbecher (6) trägt.

9. Reinigungsvorrichtung nach Anspruch 7,
**dadurch gekennzeichnet, daß** der Roboterarm (5) mit einem Greifer zum Ergreifen der Düse (8, 17, 19, 20, 21) ausgestattet ist.

10. Reinigungsvorrichtung nach einem der vorhergehenden Ansprüche 4 bis 9,
**dadurch gekennzeichnet, daß** die Düse (8, 17, 19, 20, 21) beweglich aufgehängt ist.

11. Reinigungsvorrichtung nach einem der vorhergehenden Ansprüche,
**dadurch gekennzeichnet, daß** die Führungsmittel (7) einen bewegbaren Separationsarm umfassen, der von einem Zylinder (9) angetrieben ist, wobei der Separationsarm einen Auslaß der Spülvorrichtung (4) trägt.

12. Reinigungsvorrichtung nach Anspruch 11,
**dadurch gekennzeichnet, daß** die Reinigungsvorrichtung eine Streuplatte (12) umfaßt, und daß der Auslaß des Separationsarmes über die Streuplatte (12) bewegbar ist.

13. Reinigungsvorrichtung nach einem der vorhergehenden Ansprüche,
**dadurch gekennzeichnet, daß** der Melkstand (1) mit einer Vielzahl von Behältern (11, 13) versehen ist, von denen jeder zur Aufnahme einer bestimmten Art von gebrauchter Reinigungsflüssigkeit geeignet ist.

14. Reinigungsvorrichtung nach einem der vorhergehenden Ansprüche,
**dadurch gekennzeichnet, daß** der Melkstand (1) mit einer Vielzahl von Behältern (11, 13) versehen ist, von denen jeder zur Aufnahme einer bestimmten Art von gewonnener Milch, wie z. B. Kolostrum, Milch mit Blut, Antibiotika oder dergleichen, geeignet ist.

15. Reinigungsvorrichtung nach den Ansprüchen 11 und 13 oder 11 und 14,
**dadurch gekennzeichnet, daß** der Separationsarm über einen jeweiligen Behälter bewegbar ist.

16. Reinigungsvorrichtung nach den Ansprüchen 13 und 15,
**dadurch gekennzeichnet, daß** die Reinigungsvorrichtung eine Ermittlungsvorrichtung (14) zum Ermitteln der Art der gebrauchten Reinigungsflüssigkeit umfaßt, und daß die Bewegung des Separationsarmes mit Hilfe von Daten der Ermittlungsvorrichtung (14) gesteuert wird.

17. Vorrichtung nach den Ansprüchen 14 und 15,
**dadurch gekennzeichnet, daß** die Reinigungsvorrichtung eine Ermittlungsvorrichtung (14) zum Ermitteln der Art der gewonnenen Milch umfaßt, und daß die Bewegung des Separationsarmes mit Hilfe von Daten der Ermittlungsvorrichtung (14) gesteuert wird.

18. Reinigungsvorrichtung nach Anspruch 13 oder 14,
**dadurch gekennzeichnet, daß** die Reinigungsvorrichtung mit einer Inhaltsmeßvorrichtung zum Messen des Inhalts der Behälter (11, 13) versehen ist.

19. Reinigungsvorrichtung nach Anspruch 18,
**dadurch gekennzeichnet, daß** die Inhaltsmeßvorrichtung ein Steuersignal bzw. ein Anzeigesignal ausgibt.

20. Reinigungsvorrichtung nach einem der vorhergehenden Ansprüche,
**dadurch gekennzeichnet, daß** die Reinigungsvorrichtung mit einer Anwesenheitsermittlungsvorrichtung (25) zur Ermittlung der Anwesenheit eines Tieres in dem Melkstand (1) versehen ist, wobei die Anwesenheitsermittlungsvorrichtung (25) bei Ermitteln eines Tieres in dem Melkstand (1) ein Signal an die Reinigungsvorrichtung gibt, wobei das Signal den Betrieb der Reinigungsvorrichtung stoppt bzw. verhindert.

21. Reinigungsvorrichtung nach einem der vorhergehenden Ansprüche,
**dadurch gekennzeichnet, daß** die Reinigungsvorrichtung mit einer Sauberkeitsermittlungsvorrichtung (26) zum Ermitteln der Sauberkeit des Melkstandes (1) versehen ist, wobei die Reinigungsvorrichtung mit Hilfe von Daten der Sauberkeitsermittlungsvorrichtung (26) gesteuert wird.

22. Reinigungsvorrichtung nach einem der vorhergehenden Ansprüche,
**dadurch gekennzeichnet, daß** die Reinigungsvorrichtung eine Schließvorrichtung (27) zum Verschließen des Eingangs zu dem Melkstand (1) umfaßt, wenn die Reinigungsvorrichtung in Betrieb ist.

23. Reinigungsvorrichtung nach einem der vorhergehenden Ansprüche,
**dadurch gekennzeichnet, daß** die Reinigungsvorrichtung eine Trocknungsvorrichtung zum Trocknen des Äußeren des Melkstandes (1) nach dem Reinigen umfaßt.

24. Reinigungsvorrichtung nach einem der vorhergehenden Ansprüche,
**dadurch gekennzeichnet, daß** die Reinigungsvorrichtung mit einer Zusetzvorrichtung zum Zusetzen von Zusatzstoffen zu der Reinigungsflüssigkeit versehen ist.

25. Reinigungsvorrichtung nach Anspruch 23,
**dadurch gekennzeichnet, daß** die Reinigungsvorrichtung mit einer Tieridentifikationsvorrichtung (15) versehen ist, wobei die Zusetzvorrichtung mit Hilfe von Daten der Tieridentifikationsvorrichtung (15) gesteuert wird.

26. Vorrichtung nach Anspruch 11 oder einem der vorhergehenden Ansprüche 12 bis 25 unter Bezugnahme auf Anspruch 11,
**dadurch gekennzeichnet, daß** die Vorrichtung zum Trennen der unterschiedlichen Arten von gewonnener Milch verwendet wird.

## Revendications

1. Dispositif de nettoyage pour nettoyer l'extérieur d'une salle de traite (1) au moyen d'un liquide de nettoyage, la salle de traite (1) comprenant un robot de traite (2) et un fond (3) sur lequel un animal destiné à être trait peut se tenir debout, le robot de traite (2) étant pourvu d'un dispositif de rinçage (4) pour nettoyer l'intérieur du robot de traite (2) au moyen d'un liquide de rinçage, **caractérisé en ce que** le dispositif de nettoyage pour nettoyer l'extérieur de la salle de traite (1) est constitué d'un dispositif de nettoyage automatique, et **en ce que** des moyens de guidage (7) sont fournis pour guider le liquide de rinçage provenant du robot de traite (2) et ayant été utilisé pour nettoyer l'intérieur du robot de traite (2), pour nettoyer l'extérieur de la salle de traite (1).

2. Dispositif de nettoyage selon la revendication 1, **caractérisé en ce que** le dispositif de nettoyage comprend un moyen pour appliquer une pression sur le liquide de nettoyage.

3. Dispositif de nettoyage selon la revendication 2, **caractérisé en ce que** ledit moyen comprend une pompe (24).

4. Dispositif de nettoyage selon l'une quelconque des revendications précédentes, **caractérisé en ce que** le dispositif de nettoyage comprend une tuyère qui est disposée dans une position fixe par rapport à la salle de traite (1).

5. Dispositif de nettoyage selon l'une quelconque des revendications précédentes 1 à 3, **caractérisé en ce que** la tuyère (8, 17, 19, 20, 21) est disposée de façon mobile par rapport à la salle de traite (1).

6. Dispositif de nettoyage selon la revendication 5, **caractérisé en ce que** la tuyère (8, 17, 19, 20, 21) est fixée à un rail (18).

7. Dispositif de nettoyage selon la revendication 5 ou 6, **caractérisé en ce que** la tuyère (8, 17, 19, 20, 21) est fixée à un bras robotisé (5).

8. Dispositif de nettoyage selon la revendication 7, **caractérisé en ce que** le bras robotisé (5) supporte au moins un gobelet trayeur (6).

9. Dispositif de nettoyage selon la revendication 7, **caractérisé en ce que** le bras robotisé (5) est équipé d'un organe de préhension pour saisir la tuyère (8, 17, 19, 20, 21).

10. Dispositif de nettoyage selon l'une quelconque des revendications précédentes 4 à 9, **caractérisé en ce que** la tuyère (8, 17, 19, 20, 21) est suspendue de façon mobile.

11. Dispositif de nettoyage selon l'une quelconque des revendications précédentes, **caractérisé en ce que** les moyens de guidage (7) comprennent un bras de séparation mobile entraîné par un vérin (9), ledit bras de séparation supportant une sortie du dispositif de rinçage (4).

12. Dispositif de nettoyage selon la revendication 11, **caractérisé en ce que** le dispositif de nettoyage comprend une plaque étaleuse (12), et **en ce que** la sortie du bras de séparation est mobile jusqu'au-dessus de la plaque étaleuse (12).

13. Dispositif de nettoyage selon l'une quelconque des revendications précédentes, **caractérisé en ce que** la salle de traite (1) est pourvue d'une pluralité de récipients (11, 13), chacun adapté pour contenir un type particulier de liquide de nettoyage utilisé.

14. Dispositif de nettoyage selon l'une quelconque des revendications précédentes, **caractérisé en ce que** la salle de traite (1) est pourvue d'une pluralité de récipients (11, 13), chacun adapté pour contenir un type particulier de lait obtenu, tel que du colostrum, du lait contenant du sang, des antibiotiques, ou analogue.

15. Dispositif de nettoyage selon les revendications 11 et 13 ou 11 et 14, **caractérisé en ce que** le bras de séparation est mobile jusqu'au-dessus d'un récipient pertinent.

16. Dispositif de nettoyage selon les revendications 13 et 15, **caractérisé en ce que** le dispositif de nettoyage comprend des moyens de détermination (14) pour déterminer le type de liquide de nettoyage utilisé, et **en ce que** le mouvement du bras de séparation est commandé à l'aide de données provenant des moyens de détermination (14).

17. Dispositif selon les revendications 14 et 15, **caractérisé en ce que** le dispositif de nettoyage comprend des moyens de détermination (14) pour déterminer le type de lait obtenu, et **en ce que** le mouvement du bras de séparation est commandé à l'aide de données provenant des moyens de détermination (14).

18. Dispositif de nettoyage selon la revendication 13 ou 14, **caractérisé en ce que** le dispositif de nettoyage est pourvu de moyens de mesure de contenu pour mesurer le contenu des récipients (11, 13).

19. Dispositif de nettoyage selon la revendication 18, **caractérisé en ce que** les moyens de mesure de contenu émettent un signal de commande, c'est-à-dire, un signal indicatif.

20. Dispositif de nettoyage selon l'une quelconque des revendications précédentes, **caractérisé en ce que** le dispositif de nettoyage est pourvu d'un dispositif de détection de présence (25) pour détecter la présence d'un animal dans la salle de traite (1), le dispositif de détection de présence (25) émettant un signal au dispositif de nettoyage lors de la détection d'un animal dans la salle de traite (1), ledit signal arrêtant, c'est-à-dire, empêchant le fonctionnement du dispositif de nettoyage.

21. Dispositif de nettoyage selon l'une quelconque des revendications précédentes, **caractérisé en ce que** le dispositif de nettoyage est pourvu d'un dispositif de détection de propreté (26) pour détecter la propreté de la salle de traite (1), le dispositif de nettoyage étant commandé à l'aide de données provenant du dispositif de détection de propreté (26).

22. Dispositif de nettoyage selon l'une quelconque des revendications précédentes, **caractérisé en ce que** le dispositif de nettoyage comprend un moyen de fermeture (27) pour fermer l'entrée de la salle de traite (1) lorsque le dispositif de nettoyage est en fonctionnement.

23. Dispositif de nettoyage selon l'une quelconque des revendications précédentes, **caractérisé en ce que** le dispositif de nettoyage comprend un dispositif de séchage pour sécher l'extérieur de la salle de traite (1) après le nettoyage.

24. Dispositif de nettoyage selon l'une quelconque des revendications précédentes, **caractérisé en ce que** le dispositif de nettoyage est pourvu d'un moyen additif pour ajouter des additifs au liquide de nettoyage.

25. Dispositif de nettoyage selon la revendication 23, **caractérisé en ce que** le dispositif de nettoyage est pourvu d'un dispositif d'identification d'animal (15), le moyen additif étant commandé à l'aide de données provenant du dispositif d'identification d'animal (15).

26. Dispositif selon la revendication 11, ou selon l'une quelconque des revendications précédentes 12 à 25 faisant référence à la revendication 11, **caractérisé en ce que** le dispositif est utilisé pour séparer les différents types de lait obtenus.
